# FASCICULE DE BREVET EUROPEEN

(11) **EP 4 281 887 B1**
(45) Date de publication et mention de la délivrance du brevet: **29.01.2025**
(21) Numéro de dépôt: 21840084.4
(22) Date de dépôt: 06.12.2021
(51) Int. Cl.: G06F 21/51, H04L 9/40

(54) **PROCÉDÉ ET DISPOSITIF DE CONTRÔLE DE L'ACCÈS DE MOYENS INFORMATIQUES EXTERNES DE DIAGNOSTIC À UN BUS DE DONNÉE EMBARQUÉ D'UN VÉHICULE**
VERFAHREN UND VORRICHTUNG ZUR ZUGANGSKONTROLLE ZU EINEM DATENBUS AN BORD EINES FAHRZEUGS DURCH EXTERNE DIAGNOSTISCHE RECHENMITTEL
METHOD AND DEVICE FOR CONTROLLING ACCESS TO A DATABUS ON BOARD A VEHICLE BY EXTERNAL DIAGNOSTIC COMPUTING MEANS

(30) Priorité: 25.01.2021 FR 2100678
(43) Date de publication de la demande: 29.11.2023
(73) Titulaire: Stellantis Auto SAS, 78300 Poissy (FR)
(72) Inventeur: DHAINAUT, Jean Marc, 75007 PARIS (FR)
(74) Mandataire: ESIP
(86) Numéro de dépôt international: PCT/FR2021/052211
(87) Numéro de publication internationale: WO 2022/157432

(56) Documents cités:
- FR-A1- 3 018 412
- FR-A1- 3 082 967
- US-A1- 2017 093 866
- US-A1- 2018 300 477

## Description

### Domaine technique

La présente invention revendique la priorité de la demande française 2100678 déposée le 25.01.2021 dont le contenu (texte, dessins et revendications) est ici incorporé par référence. La présente invention concerne le domaine des réseaux de communication de véhicules terrestres à moteur. L'invention porte en particulier sur un dispositif de contrôle de l'accès de moyens informatiques de diagnostic à un bus de donnée embarqué d'un véhicule. L'invention s'applique notamment aux véhicules automobiles.

### Arrière-plan technologique

La majorité des bus de données embarqués d'un véhicule sont connectés à un calculateur appelé communément BCM (Body Control Module en anglais) assurant un rôle de passerelle qui permet de faire transiter des trames de communication porteuses d'information entre ces différents bus de données. Parmi ces bus de donnée, il est commun, dans le domaine automobile, d'utiliser des bus CAN (Controller Area Network en anglais) pour relier entre eux des calculateurs embarqués d'un véhicule et accessibles via ces bus de donnée. Ainsi, des bus de donnée embarqués d'un véhicule peuvent échanger un très grand nombre d'informations (vitesses, températures, états...) jusqu'à 200 fois par seconde. Le terme bus est utilisé car les calculateurs sont branchés généralement en parallèle sur les deux fils qui composent ces bus de données.

Il existe deux normes de bus CAN : les bus de donnée CAN HS (High Speed en anglais), normalisé par l'ISO 11898-2 en 2003 et les bus de donnée CAN LS (Low Speed en anglais), normalisé par l'ISO 11898-3 en 2006.

Les bus CAN HS utilisent obligatoirement deux fils. Ils sont, habituellement, utiliser comme bus principaux des véhicules de série pour relier des calculateurs tels qu'un calculateur moteur multifonctions (CMM), un calculateur Boîte de vitesse automatique (BVA), un calculateur Direction Assistée ou encore un calculateur d'assistance au freinage pour n'en citer que quelques-uns.

Un bus CAN HS a une vitesse de transmission allant de 250 Kb/s à 1 Mb/s.

Un bus CAN HS est habituellement considéré comme étant un bus « différentiel », c'est-à-dire qu'au repos les deux lignes (fils) H et L sont à la même tension et un calculateur qui « parle » sur la ligne va tirer la tension de la ligne H vers le haut et la tension de la ligne L vers le bas. Un calculateur qui « écoute » sera sensible à la différence de tension entre les lignes H et L H et L Dans une très grande majorité de cas, chaque calculateur envoie des données qui sont reçues par tous les calculateurs présents sur un bus CAN HS, dans des messages appelés trames de communication.

Les bus CAN LS utilisent normalement deux fils mais peuvent aussi fonctionner avec 1 seul (c'est pour cela qu'ils sont dits tolérant à la perte (fault tolérant en anglais) : si un fil est coupé, le dialogue peut se poursuivre sur l'autre. Les bus CAN LS ou CAN LSFT (LS tolérant à la perte) ne sont utilisés dans le domaine de l'automobile qu'en tant que bus annexes car leur vitesse de transmission ne dépasse pas 125 Kb/s.

D'autres bus de donnée sont utilisés dans le domaine automobile tels que les bus LIN (Local Interconnect Network en anglais, ou réseau interconnecté local en français) ou encore FlexRay ou MOST (Media Oriented Systems Transport en anglais).

Dans un véhicule, des informations peuvent ainsi circuler entre des bus de donnée CAN et LIN par exemple ou entre des bus de données de vitesses différentes tels qu'entre des bus CAN HS et CAN LS. Par exemple, un régime moteur calculé par un CMM situé sur un bus de données CAN HS à 500 Kbit/s peut être communiqué à une passerelle pour le pilotage d'un compte-tours via un bus de données CAN LS à 125 Kbit/s.

Un calculateur assurant le rôle de passerelle est également prévu pour être connecté à des moyens informatiques externes de diagnostic via, par exemple, un bus de donnée CAN HS et une prise de diagnostic (OBD de l'anglais On Board Diagnosis).

Par la suite une prise de diagnostic comporte au moins un port matériel. Elle peut également comporter, en variante, au moins un connecteur d'instrumentation.

Les moyens informatiques externes de diagnostic sont par exemple des programmes mis en oeuvre par un ordinateur et/ou un calculateur. Cette connexion avec des moyens informatiques externes de diagnostic permet le diagnostic, le télécodage et le téléchargement, en usine ou en après-vente, de programmes relatifs à la gestion globale du véhicule ou dédiés à des fonctions particulières du véhicule.

Or, en usine, il est nécessaire d'effectuer le téléchargement de certains programmes sur une ligne de montage véhicule dans un temps restreint, correspondant à un pas de la ligne de montage, afin de ne pas ralentir le flux de production des véhicules. Les programmes qui doivent être téléchargés en ligne mettent en oeuvre la gestion globale du véhicule ou des fonctions particulières relatives au moteur (Calculateur Multifonctions Moteur, CMM en abrégé) ou à la boîte de vitesse automatique (BVA) qui sont des programmes de plusieurs mégaoctets chacun, ainsi que d'autres programmes de taille plus modestes.

Afin d'optimiser la durée de téléchargement, le téléchargement de programmes se font en parallèle sur deux ports matériels distincts de la prise de diagnostic. Par exemple, le programme de gestion globale du véhicule de taille importante puis des programmes relatifs à des fonctions de l'habitacle du véhicule de plus petites tailles sont téléchargés à partir des moyens informatiques externes de diagnostic via un premier port matériel de la prise de diagnostic, la passerelle et un bus de donnée CAN HS. Le programme relatif au CMM est téléchargé à partir des moyens informatiques externes de diagnostic via un second port matériel de la prise de diagnostic et un autre bus de donnée CAN HS communément appelé Powertrain & Châssis en anglais (bus de donnée « sous capot » en français). Cette dernière connexion est alors dite directe car elle ne passe pas par la passerelle.

Lors de phase de développement et de mise au point de nouveaux véhicules, la connexion directe du bus de donnée CAN HS « Powertrain & Châssis » sur la prise de diagnostic permet de connecter facilement des moyens informatiques externes de diagnostic afin d'espionner des trames de communication circulant sur les bus de donnée et également de faire des mesures directes de signaux électriques (amplitude des signaux, points d'échantillonnage, etc.). Cependant, la connexion directe des bus de donnée embarqués du véhicule sur la prise de diagnostic présente des inconvénients.

Tout d'abord, les branches de ces bus de donnée qui sont connectées à la prise de diagnostic constituent des « antennes » qui peuvent dégrader la tenue de ces bus de donnée du point de vue de la compatibilité électromagnétique.

Ensuite, la prise de diagnostic peut induire des risques de décharges électrostatiques si des protections ne sont pas prévues.

De plus, la prise de diagnostic peut présenter des risques de panne si un corps étranger électriquement conducteur est introduit entre des broches, et en cas de défaillance ou d'utilisation inappropriée des moyens informatiques externes de diagnostic, des trames de communication non autorisées soient émis(es) par celui-ci, ce qui pourrait induire une dégradation ou un fonctionnement inapproprié d'un ou plusieurs calculateurs et/ou organes embarqués du véhicule.

La demande de brevet français FR3082967 décrit une solution pour surmonter certains de ces inconvénients. Cette solution comprend un calculateur pourvu de moyens d'interface assumant un rôle de passerelle en permettant la transmission de trames de communication et/ou de signaux électriques entre au moins un premier port matériel adapté pour être connecté à au moins un bus de donnée et un deuxième port matériel adapté pour être connecté à au moins un bus de donnée embarqué du véhicule, des moyens de calcul assumant au moins un rôle d'authentification en permettant de déterminer un ordre de commande en interprétant au moins une donnée contenue dans une requête d'authentification reçue sur le premier port matériel et des moyens de filtrage adaptés pour empêcher la transmission au travers des moyens d'interface d'au moins une trame de communication non autorisée. La solution comporte également un module de protection adapté pour empêcher la propagation d'une surtension, et au moins un module de commutation connecté au module de protection et adapté pour prendre une position de transmission autorisant la transmission de trames de communication entre une entrée et une sortie du module de commutation en fonction d'un ordre de commande reçu sur un port matériel de commande connecté au calculateur par l'intermédiaire d'une liaison filaire.

La solution proposée par la demande de brevet français FR3082967 nécessite que la requête d'authentification soit émise via un premier port de la prise de diagnostic et que la connexion directe avec un bus de donnée embarqué se fasse via un second port matériel de la prise de diagnostic.

Cette solution permet donc la connexion de moyens informatiques externes de diagnostic qui comportent deux ports matériels dédiés à cette connexion. Toutefois, ce n'est pas toujours le cas de ces moyens qui peuvent n'en comporter qu'un seul. C'est le cas, par exemple, des moyens informatiques réglementaires utilisés par les forces de l'ordre (communément appelé outil de scan, scantool en anglais). Ces moyens n'ont pas l'opportunité de pouvoir s'authentifier avant de se connecter à un bus de donnée embarqué du véhicule via le module de commutation car ils ne peuvent être connecter qu'à un seul des port matériel de la prise de diagnostic.

La demande de brevet français FR3082967 présente donc un problème de compatibilité avec des moyens informatiques externes de diagnostic qui ne comportent qu'un seul port matériel dédié à la connexion avec un bus de donnée embarqué du véhicule. De plus, cette demande de brevet français FR3082967 n'assure pas la déconnexion des moyens informatiques externes de diagnostic à un bus de donnée embarqué du véhicule en cas de transmission de trame de communication non autorisée émanant de ces moyens tels que par exemple des trames de communication porteuses de commande d'accélération, de freinage ou d'activation de la direction alors que le véhicule est en train de rouler.

### Résumé de l'invention

Un objet de la présente invention est de contrôler l'accès de moyens informatiques externes de diagnostic à un bus de donnée embarqué d'un véhicule.

Un autre objet de la présente invention est d'assurer une conformité d'accès aux moyens informatiques externes de diagnostic comportant un seul port matériel dédié.

Un autre objet de la présente invention est de sécuriser l'accès un bus de donnée embarqué d'un véhicule.

Un autre objet de la présente invention est de faciliter le téléchargement de programmes via un bus de donnée embarqué d'un véhicule.

Selon un premier aspect, l'invention concerne un dispositif de contrôle de l'accès de moyens informatiques externes de diagnostic à au moins un bus de donnée embarqué d'un véhicule. Le dispositif comporte un calculateur assurant le rôle de passerelle en permettant la transmission de trames de communication et/ou de signaux électriques entre un premier port matériel du calculateur adapté pour être connecté à un premier bus de donnée et à au moins un second port matériel du calculateur adapté pour être connecté audit au moins un bus de donnée embarqué du véhicule ; une prise de diagnostic comportant un premier port adapté pour être connecté au premier port matériel du calculateur via le premier bus de donnée ; des moyens d'authentification assumant un rôle d'authentification desdits moyens informatiques externes de diagnostic sur la base de requête d'authentification reçue sur le premier port matériel du calculateur ; des moyens de filtrage adaptés pour bloquer la transmission à travers de la passerelle d'au moins une trame de communication non autorisée ; des moyens de commutation connectés à un second port matériel de la prise de diagnostic et adaptés pour connecter le second port matériel de la prise de diagnostic au premier port matériel du calculateur lorsque lesdits moyens de commutation sont au repos et pour connecter le second port matériel de la prise de diagnostic au second port matériel du calculateur lorsque lesdits moyens informatiques externes de diagnostic sont authentifiés par les moyens d'authentification.

Selon un exemple de réalisation particulier, le calculateur désactive les moyens de commutations qui retrouvent leur position de repos sur demande des moyens informatiques externes de diagnostic, en cas de perte de communication entre les moyens informatiques externes de diagnostic et un bus de donnée embarqué du véhicule, à la mise en veille du véhicule, au bout d'un temps maximum de communication ou en cas de transmission d'une trame de communication non autorisée.

Selon un exemple de réalisation particulier, le calculateur pilote les moyens de commutation pour donner accès à un bus de donnée particulier embarqué du véhicule.

Selon un exemple de réalisation particulier, le dispositif comporte en outre des moyens de protection qui sont connectés aux moyens de commutation.

Selon un exemple de réalisation particulier, le calculateur, les moyens d'authentification, les moyens de filtrage, les moyens de commutation et/ou les moyens de protection font partie d'un même boîtier.

Selon un exemple de réalisation particulier, les moyens de commutation sont intégrés au calculateur.

Selon un exemple de réalisation particulier, les moyens de commutation sont implantés dans un boîtier séparé.

Selon un deuxième aspect, l'invention concerne un procédé de contrôle de l'accès de moyens informatiques externes de diagnostic à au moins un bus de donnée embarqué d'un véhicule, ledit procédé comprenant des étapes suivantes :
authentification desdits moyens informatiques externes de diagnostic sur la base de requête d'authentification reçue sur un premier port matériel d'un calculateur assurant le rôle de passerelle en permettant la transmission de trames de communication et/ou de signaux électriques entre un premier port matériel du calculateur adapté pour être connecté à un premier bus de donnée et à au moins un second port matériel du calculateur adapté pour être connecté audit au moins un bus de donnée embarqué du véhicule ;
si les moyens informatiques externes de diagnostic ne sont pas authentifiés, le calculateur désactive des moyens de commutation qui passent dans une position de repos, lesdits moyens de commutation étant connectés à un second port matériel d'une prise de diagnostic et adaptés pour connecter le second port matériel de la prise de diagnostic au premier port matériel du calculateur ;
si les moyens informatiques externes de diagnostic sont authentifiés, le calculateur active les moyens de commutation qui passent alors de la position de repos à la position active, pour connecter le second port matériel de la prise de diagnostic au second port matériel du calculateur.

Selon un troisième aspect, l'invention concerne un véhicule, notamment autonome, par exemple de type automobile, comprenant un dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

### Brève description des figures

D'autres caractéristiques et avantages de l'invention ressortiront de la description des modes de réalisation non limitatifs de l'invention ci-après, en référence aux figures 1 à 4 annexées, sur lesquelles :
[Fig. 1] illustre schématiquement un dispositif de contrôle de l'accès de moyens informatiques de diagnostic à un bus de donnée embarqué d'un véhicule, selon un exemple de réalisation particulier de la présente invention ;
[Fig. 2] illustre schématiquement un dispositif de contrôle de l'accès de moyens informatiques de diagnostic à un bus de donnée embarqué d'un véhicule, selon un exemple de réalisation particulier de la présente invention ;
[Fig. 3] illustre schématiquement des moyens de commutation selon un exemple de réalisation particulier de la présente invention ; et
[Fig. 4] illustre un organigramme des différentes étapes d'un procédé de contrôle de l'accès de moyens informatiques de diagnostic à un bus de donnée embarqué d'un véhicule, selon un exemple de réalisation particulier de la présente invention.

### Description des modes de réalisation

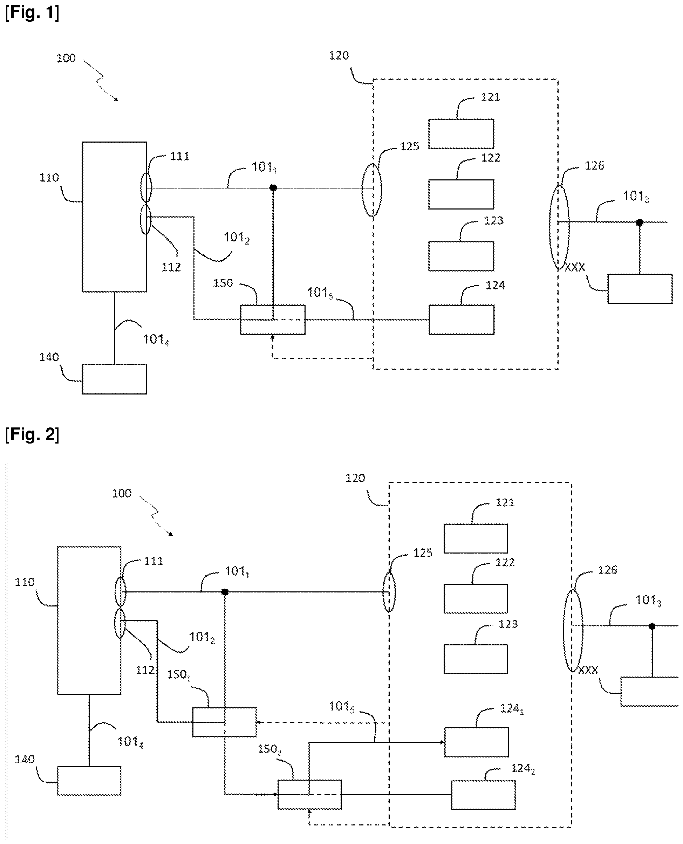

Un procédé et un dispositif de vont maintenant être décrits dans ce qui va suivre en référence conjointement aux figures 1 à 4. Des mêmes éléments sont identifiés avec des mêmes signes de référence tout au long de la description qui va suivre.

Les figures qui vont être décrites par la suite utilisent une symbolique « unifilaire » mais certains bus de donnée embarqués, CAN HS ou CAN LSFT notamment, utilisent une transmission différentielle sur une paire de 2 fils. Dans ces figures, les liaisons unifilaires représentées pour les bus de donnée CAN notamment correspondent donc à une paire de 2 fils. Les moyens de commutation 150 qui seront décrits par la suite seront donc adaptés pour gérer ces paires de fils.

Selon l'invention, un dispositif de contrôle de l'accès de moyens informatiques externes de diagnostic à au moins un bus de donnée embarqué d'un véhicule comporte un calculateur assumant un rôle de passerelle en permettant la transmission de trames de communication et/ou de signaux électriques entre un premier port matériel du calculateur, adapté pour être connecté à un premier bus de donnée et à au moins un second port matériel du calculateur, adapté pour être connecté audit au moins un bus de donnée embarqué du véhicule.

Le dispositif comporte en outre une prise de diagnostic comportant un premier port adapté pour être connecté au premier port matériel du calculateur via le premier bus de donnée ; des moyens d'authentification assumant un rôle d'authentification desdits moyens informatiques externes de diagnostic sur la base de requête d'authentification reçue sur le premier port matériel du calculateur ; et des moyens de filtrage adaptés pour bloquer la transmission à travers de la passerelle d'au moins une trame de communication non autorisée.

Le dispositif comporte aussi des moyens de commutation connectés à un second port matériel de la prise de diagnostic et adaptés pour connecter le second port matériel de la prise de diagnostic au premier port matériel du calculateur lorsque lesdits moyens de commutation sont au repos et pour connecter le second port matériel de la prise de diagnostic au second port matériel du calculateur lorsque lesdits moyens informatiques externes de diagnostic sont authentifiés par les moyens d'authentification.

Lors de la connexion de moyens informatiques externes de diagnostic comportant un seul port matériel dédié à la connexion, avec un bus de donnée embarqué d'un véhicule, ces moyens vont alors être connectés au calculateur via le second port de la prise de diagnostic, les moyens de commutation, alors au repos, et le premier port matériel du calculateur.

Lors de la connexion de moyens informatiques externes de diagnostic comportant plus d'un seul port matériel dédié à la connexion avec un bus de donnée embarqué d'un véhicule, ces moyens vont alors être connectés au calculateur via soit le premier port matériel de la prise de diagnostic et le premier port matériel du calculateur, soit le second port de la prise de diagnostic, les moyens de commutation au repos et le premier port matériel du calculateur.

Les moyens informatiques externes de diagnostic émettent alors une requête d'authentification auprès du calculateur via le premier bus de donnée.

Le dispositif selon l'invention permet l'authentification des moyens informatiques externes de diagnostic quel que soit le nombre de port matériel dédié à la connexion avec un bus de donnée embarqué d'un véhicule.

Une fois les moyens informatiques externes de diagnostic authentifiés, le calculateur active les moyens de commutation et une connexion directe (sans passer par la passerelle) entre les moyens informatiques externes de diagnostic et au moins un bus de donnée embarqué du véhicule est établie. Les moyens informatiques externes de diagnostic peuvent alors émettre des trames de communication porteuses de requêtes de diagnostic à des calculateurs et/ou organe du véhicule via ce ou ces bus de donnée embarqués du véhicule.

En cas d'émission de trames de communication non autorisées par rapport au contexte (par exemple des trames de communication porteuses de commande d'accélération alors que la boite de vitesse n'est pas au point mort ou des trames de communication porteuses de commande de freinage ou d'activation de la direction alors que le véhicule n'est pas à l'arrêt), le calculateur, dès qu'il aura détecté les premières trames de communication non autorisées sur le(s) bus de donné embarqué(s) du véhicule, désactive les moyens de commutation afin de déconnecter le(s)dit(s) bus de donnée des moyens informatiques externes de diagnostic. Ainsi, les trames de communication porteuses de commande non autorisées ne seront reçues par les calculateurs accessibles via ce(s) bus de donnée que de façon très temporaire et n'auront qu'une incidence extrêmement limitée sur la dynamique du véhicule compte tenu des temps de réaction mécanique des systèmes de propulsion, freinage et direction du véhicule : légère accélération intempestive, micro-freinage, ... Le calculateur peut en outre prévenir le conducteur via une interface Homme/Machine pour indiquer que le véhicule a fait l'objet d'une réception de trame de communication non autorisées et a mis en oeuvre un mécanisme de protection. Il peut aussi inviter le conducteur à faire contrôler son véhicule par un réparateur agréé.

Il est largement connu d'isoler des bus de donnée embarqués d'un véhicule par rapport à une prise de diagnostic en utilisant une passerelle. Mais ces solutions sont moins performantes, en termes de temps de téléchargement des calculateurs situés en aval de la passerelle ou en termes d'instrumentation des bus de donnée en phase de développement, que celle proposée par l'invention qui utilise des moyens de commutation.

Par ailleurs une solution utilisant des moyens de commutation limite les investissements et les coûts de développement et de validation.

Enfin, le dispositif de l'invention permet de se conformer à la réglementation sur la Cybersécurité, « UNECE Cybersecurity Régulation » (UN R155).

[Fig. 1] illustre schématiquement un dispositif 100 de contrôle de l'accès de moyens informatiques de diagnostic à un bus de donnée embarqué d'un véhicule, selon un exemple de réalisation particulier de la présente invention.

Le dispositif 100 comporte une pluralité de bus de données 101₁, 101₂, 101₃ et 101₅ embarqués du véhicule connectés à des moyens informatiques externes de diagnostic 140 par l'intermédiaire d'une prise de diagnostic 110 (On Board Diagnosis en anglais) et d'un calculateur 120.

Les bus de donnée 101₁ 101₂, 101₃ et 101₅ peuvent être notamment de type CAN HS.

Le bus de donnée 101₁ peut aussi être de type Ethernet.

Un voire plusieurs bus de donnée 101₃ peuvent être mis en oeuvre pour permettre l'accès à des calculateurs et/ou organes embarqués du véhicule.

Le calculateur 120 assure le rôle d'une passerelle 121 en permettant la transmission de trames de communication et/ou de signaux électriques entre un premier port matériel 125 du calculateur 120 adapté pour être connecté à au bus de donnée 101₁, et un deuxième port matériel 126 du calculateur 120 adapté pour être connecté à au moins un bus de donnée 101₃.

Le dispositif 100 comporte en outre des moyens d'authentification 122 adaptés pour mettre en oeuvre une authentification des moyens informatiques externes de diagnostic 140 basée sur une requête d'identification reçue sur le premier port matériel 125.

Le calculateur 120 est également connecté à la prise de diagnostic 110 par le port 125 du calculateur 120 et un premier port matériel 111 de la prise de diagnostic 110 via le bus de donnée 101₁.

Le bus de données 101₁ est dédié à l'interface avec les moyens informatiques externes de diagnostic 140 permettant le diagnostic, le télécodage et le téléchargement, en usine ou en après-vente, de programmes relatifs à la gestion globale du véhicule ou dédiés à des fonctions et/ou organes/calculateurs dédiés du véhicule.

Lors d'un diagnostic, un télécodage et/ou un téléchargement, un opérateur connecte les moyens de diagnostic 140 à la prise de diagnostic 110 via une connexion filaire 101₄ reliant au moins un port des moyens informatiques externes de diagnostic 140 et au moins un port de la prise de diagnostic 110.

Les moyens de diagnostic 140 contrôlent, par exemple, la conformité du véhicule (contrôle technique, contrôle par la police,..), l'interfaçage sans fil (over the air en anglais) du véhicule avec des services débarqués (appareils externes (dongle en anglais) avec connexion GSM, ou avec connexion Bluetooth ou WIFI vers le téléphone de l'utilisateur) parfois branchés par l'utilisateur sur la prise de diagnostic 110, par exemple dans le cadre de contrats d'assurance prenant en compte le kilométrage parcouru et/ou le type de conduite (pay as you drive en anglais).

Le calculateur 120 comporte en outre des moyens de filtrage 123 agissant au même titre qu'un pare-feu pour analyser des trames de communication et, éventuellement, bloquer au travers de la passerelle 122 la transmission de trames de communication non autorisées qui seraient reçues au niveau du port matériel 125.

Par exemple, les moyens de filtrage 123 peuvent être configurés pour interdire l'écriture par un appareil externe sur les bus de données 101₃ embarqués du véhicule ou bien limiter celle-ci a des trames de communication autorisées, ne présentant pas de danger potentiel pour le véhicule, ses passagers et les autres usagers de la route.

Les moyens de filtrage 123 bloquent par exemple la possibilité d'envoyer sur les bus de données 101₃ des trames de communication porteuse de commande d'accélération, de freinage ou d'activation de la direction.

Le dispositif 100 comporte également des moyens de commutation 150 connectés à un second port 112 de la prise de diagnostic 110.

Selon un exemple de réalisation particulier, le dispositif 100 comporte en outre des moyens de protection 124 qui sont connectés aux moyens de commutation 150.

Les moyens de protection 124 protègent les bus de donnée 101₃ contre les décharges électrostatiques qui peuvent être générées par les opérateurs lors des branchements ou débranchements des moyens informatiques externes de diagnostic 140. Les moyens de protection 124 empêchent la propagation d'une surtension qui pourrait été transmise au travers des moyens de commutation 150. A cette fin, les moyens de protection 124 sont connectés directement au moyens de commutation 150 par une liaison de préférence filaire 101₅.

Cette protection contre les décharges électrostatiques est particulièrement souhaitable sur les bus de donnée CAN HS « Powertrain & Châssis » notamment.

Pour les bus de donnée connectés uniquement à des connecteurs d'instrumentation sur des véhicules de développement ou de présérie, il peut être envisagé de se passer de ces protections si des mesures particulières sont prises par les opérateurs lors des manipulations des connecteurs afin d'éviter les décharges électrostatiques.

Les moyens de commutation 150 sont pilotés par le calculateur 120 pour que ces moyens connectent le second port matériel 112 de la prise de diagnostic au premier port matériel 125 du calculateur lorsque les moyens de commutation 150 sont au repos et pour connecter le second port matériel 112 de la prise de diagnostic 110 au second port matériel 126 du calculateur 120 lorsque lesdits moyens informatiques externes de diagnostic 100 sont authentifiés par les moyens d'authentification 122.

Les moyens de commutation 150 réduisent le temps de téléchargement en usine de programmes ayant les plus tailles importantes tels que ceux relatifs au CMM ou à la boîte de vitesse automatique (BVA) par exemple. Ils permettent aussi l'instrumentation de tout ou partie des bus de donnée embarqués à des fins de mise au point en phase de développement ou d'industrialisation.

Ainsi, en activant ces moyens de commutation 150, les moyens informatiques externes de diagnostic 140 se connectent à différents bus de données 101₃.

Par exemple, lorsqu'ils sont activés, les moyens de commutation 150 peuvent connecter un bus de donnée 101₃ particulier tel que le bus CAN HS « Powertrain & Châssis », sur lequel se trouvent des calculateurs tels que le CMM ou le calculateur BVA, aux moyens informatiques externes de diagnostic 140 via le bus de données 101₅, sans passer par la passerelle 122. Lorsqu'ils sont au repos ou dès lors qu'ils sont désactivés, les moyens de commutation 150 évitent ou coupent tout connexion entre un bus de donnée 101₃ et les moyens informatiques externes de diagnostic 140.

Par ailleurs, selon le nombre de ports matériels de la prise de diagnostic 110, les connexions avec les bus de données 101₃ peuvent être réalisées en parallèle. Par exemple, tel qu'illustré sur la figure 1, lorsque les moyens de commutation 150 sont activés, les moyens informatiques externes de diagnostic 140 peuvent être connectés à la fois à un bus de donnée 101₃ via le bus de donnée 101₁ et à un autre bus de donnée 101₃ via le bus de donnée 101₅.

Dans une première opération, les moyens de commutation 150 sont au repos. Les bus de donnée 101₃ ne sont pas connectés à la prise de diagnostic 110.

Les risques inhérents à la connexion des bus de données 101₃ sur la prise de diagnostic 110 sont alors évités. Ces risques peuvent être dus à des incompatibilités électromagnétiques, des décharges électrostatiques, des pannes si un corps étranger électriquement conducteur est introduit entre les ports matériels du calculateur et/ou de la prise de diagnostic 110, de transmission de trames de communication non-autorisées.

La passerelle 121 peut mettre à disposition sur le bus de donnée101₁, des informations sur le véhicule qui sont accessibles via les bus de donnée 101₃ et qui sont nécessaires à des appareils externes (position GPS véhicule, kilométrage, vitesse, accélération, ...).

Selon une deuxième opération, les moyens informatiques externes de diagnostic 140 émettent une requête d'authentification à destination du calculateur 120 via le bus de donnée 101₁, de préférence en utilisant des échanges cryptés.

Le second port matériel 112 de la prise de diagnostic 110 est relié au port 123 du calculateur lorsque les moyens de commutation 150 sont au repos permettant ainsi aux moyens informatiques externes de diagnostic 140 d'émettre la requête d'authentification auprès du calculateur 120 via soit le port matériel 111, soit le port matériel 112 selon la connectique des moyens informatiques externes de diagnostic 140.

Par exemple, si les moyens informatiques externes de diagnostic 140 comporte deux ports matériels dédiés à la connexion avec un bus de donnée 101₃alors l'un de ces ports est relié au port matériel 111 et l'autre au port matériel 112. La requête peut alors être émise via l'un de ces deux ports.

Si les moyens informatiques externes de diagnostic 140 ne comportent qu'un seul port matériel dédié à la connexion avec un bus de donnée 101₃, tel que les outils réglementaires utilisés par les forces de l'ordre (scantool en anglais), alors ce port est relié au port matériel 112 pour que les moyens informatiques externes de diagnostic 140 puissent s'authentifier auprès du calculateur 120 et communiquer avec des calculateurs embarqués du véhicule via un bus de donnée 101₃ tel que le bus de donnée« Powertrain & Châssis ».

Dans une troisième opération, le calculateur 120 active les moyens de commutation 150 qui passent alors de la position de repos à la position active, pour connecter le second port matériel 112 de la prise de diagnostic au second port matériel 126 du calculateur. Les moyens informatiques externes de diagnostic 140 sont alors connectés avec des calculateurs et/ou organes accessibles via un bus de donnée 101₃ et le bus de donnée 101₅.

Ainsi, par exemple, les moyens informatiques externes de diagnostic 140 émettent/reçoivent des trames de communication via un bus de donnée 101₃ tel que le bus CAN « Powertrain & Châssis sans passer par la passerelle 122.

En mode instrumentation, les moyens informatiques externes de diagnostic 140 ont alors un accès direct aux signaux physiques circulant sur les bus de donnée 101₃ (amplitude des signaux, points d'échantillonnage, etc.).

Selon une variante, le calculateur 120 pilote des moyens de commutation 150 pour donner accès à un bus de donnée particulier.

Par exemple, le pilotage est basé sur une demande des moyens informatiques externes de diagnostic 140 pour accéder à un calculateur particulier embarqué du véhicule.

Dans une quatrième opération, le calculateur 120 désactive les moyens de commutations 150 qui retrouvent leur position de repos, interdisant toute transmission de trames de communication sans passer par la passerelle 122.

Selon une variante, les moyens de commutations sont désactivés sur demande des moyens de diagnostic 140.

Selon une variante, les moyens de commutations sont désactivés en cas de perte de communication entre les moyens de diagnostic 140 et un bus de donnée 101₃. Par exemple lorsque les moyens de diagnostic 140 ne sont plus connectés à la prise de diagnostic 110.

Selon une variante, les moyens de commutations sont désactivés à la mise en veille du véhicule.

Selon une variante, les moyens de commutations sont désactivés au bout d'un temps maximum de communication.

Selon une variante, les moyens de commutation 150 sont désactivés lorsque 'une trame de communication est non autorisée par le calculateur 120.

Par exemple, une trame de communication est non autorisée par le calculateur 120 lorsque cette trame de communication est porteuse d'une commande qui n'est pas en adéquation avec un contexte par exemple des trames de communication porteuses de commande d'accélération alors que la boite de vitesse n'est pas au point mort ou des trames de communication porteuses de commande de freinage ou d'activation de la direction alors que le véhicule n'est pas à l'arrêt).

Selon une variante, le calculateur 120 prévient le conducteur du véhicule pour lui indiquer que le véhicule a fait l'objet d'une cyber-attaque et a mis en oeuvre un mécanisme de protection.

Selon une variante, le calculateur 120 invite le conducteur à faire contrôler son véhicule par un réparateur agréé.

Selon un mode de réalisation du dispositif, plusieurs moyens de commutation sont pilotés par le calculateur 120.

Selon l'exemple de la figure 2, des moyens de commutation 150₁ sont connectés à un second port 112 de la prise de diagnostic 120. Les moyens de commutation 150₁ sont pilotés par le calculateur 120 pour que ces moyens connectent le second port matériel 112 de la prise de diagnostic au premier port matériel 125 du calculateur lorsque les moyens de commutation 150₁ sont au repos et pour connecter le second port matériel 112 de la prise de diagnostic à un port d'autres moyens de commutation 150₂ lorsque les moyens informatiques externes de diagnostic 140 sont authentifiés par les moyens d'authentification 122. Les moyens de commutation 150₂ sont pilotés par le calculateur 120 pour que ces moyens connectent le second port matériel 112 de la prise de diagnostic à un premier bus de donnée 101₃ embarqué du véhicule lorsque les moyens de commutation 150₂ sont au repos et pour connecter le second port matériel 112 de la prise de diagnostic à un second bus de donnée 101₃ embarqué du véhicule lorsque les moyens de commutation 150₂ sont activés.

Selon cet exemple, le calculateur 120 est configuré pour piloter les moyens de commutation 150₁ et 150₂ pour que des trames de communication soient transmises entre les moyens informatiques externes de diagnostic 140 et un seul bus de données 101₃.

En variante, d'autres configurations des moyens de commutation peuvent permettre des transmissions simultanées de trames de communication entre les moyens de diagnostic 140 et plusieurs bus de donnée 101₃.

En variante, le calculateur 120 peut suivre un ordonnancement choisi pour définir la transmission successive ou simultanée de trames de communication.

L'utilisation de plusieurs moyens de commutation 150 correspond à des besoins d'instrumentation de ces bus de donnée dans des phases allant des prototypes jusqu'à des préséries potentiellement commercialisables et permet de connecter alternativement plusieurs bus de donnée embarqués (CAN « ADAS », CAN « Powertain & Châssis ») peuvent, chacun à leur tour ou simultanément, selon la connectique utilisée et selon le nombre et le type de ports matériels disponibles sur les moyens informatiques externes de diagnostic, être connectés à ce dernier. Plusieurs bus de donnée peuvent ainsi être connectés sur un même port.

Les opérations mises en oeuvre sont alors sensiblement identiques à celles décrites ci-dessus, à la différence qu'il devient possible pour les moyens informatiques externes de diagnostic 140 de requérir accès à l'un des bus de données indépendamment des autres.

Selon une variante, les mêmes moyens de protection 124 sont partagés par les moyens de commutations 150 dédiés aux bus de donné 101₃.

Selon une autre variante, des moyens de protection 124 sont aussi dédiés à chaque bus de donnée 101₃.

Selon des variantes de mise en oeuvre du dispositif 100, les moyens 121, 122, 123, 124, 150 peuvent faire partie d'un même boîtier ou faire partie de plusieurs boîtiers connectés entre eux.

Le dispositif 100 permet de préserver la durée de téléchargement de programmes de taille importante en usine via le bus de données 101₅ (sans passer par la passerelle 122) tout en permettant le téléchargement de programme tel que ceux relatifs à la commande de moteur via le bus de donnée 101₁, en préservant la possibilité d'instrumenter facilement le bus de donnée CAN HS Powertrain & Châssis. Le dispositif 100 sécurise l'accès aux bus de donnée 101₃ en ne permettant l'accès à ces bus de donnée seulement à des moyens informatiques externes de diagnostic authentifiés et en désactivant les moyens de commutation 150 dès qu'une trame de communication transmise est non autorisée. Le dispositif 100 permet aussi de conserver un accès physique aux bus de donnée pour l'instrumentation (permettant de lire directement les signaux physiques, sans aucun décalage temporaire), de télécharger des calculateurs accessibles via les bus de donnée 101₃ sans aucun temps de transfert, et, de minimiser, selon certains exemples de réalisation, l'impact sur le dimensionnement du calculateur 120.

Les éléments du dispositif 100, individuellement ou en combinaison, peuvent être intégrés dans un unique circuit intégré, dans plusieurs circuits intégrés, et/ou dans des composants discrets. Le dispositif peut être réalisé sous la forme de circuits électroniques ou de modules logiciels (ou informatiques) ou encore d'une combinaison de circuits électroniques et de modules logiciels. Le dispositif 100 peut comprendre un (ou plusieurs) processeur(s) et/ou micro-processeur(s) configurés pour l'exécution des instructions du ou des logiciels embarqués dans le dispositif 100. Le processeur peut inclure de la mémoire intégrée, une interface d'entrée/sortie, et différents circuits connus de l'homme du métier. Le dispositif 100 peut comprendre en outre au moins une mémoire, par une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique. Le code informatique comprenant les instructions à charger et exécuter par le processeur est par exemple stocké sur la mémoire ou le dispositif de stockage mémoire.

Selon des variantes de mise en oeuvre du dispositif 100, les moyens de commutation 150 peuvent être intégrés au calculateur 120, la passerelle 122 peut être intégrée dans le calculateur 122 ou bien être réalisée par un calculateur dédié ne réalisant que cette fonction, les moyens de commutation 150, 150₁ et/ou 105₂ peuvent être intégrés dans la passerelle 122, dans le calculateur 120 ou être indépendant.

L'intégration des moyens de commutation 150 dans le calculateur 120 est la moins coûteuse des implantations
Les moyens de commutation 150, 150₁ et/ou 105₂ peuvent être intégrés dans un (ou des) boîtier(s) commandé(s) par un calculateur tel que le calculateur 120. Ce(s) boîtier(s) sera (seront) alors préférentiellement implanté(s) dans une zone difficile d'accès sans démontage de nombreuses pièces afin de limiter les possibilités de piratage.

Selon un exemple d'implantation des moyens de commutation 150 étant implantés dans un boîtier, ce boîtier peut prendre la forme d'un relais automobile afin de rendre plus difficile son identification et ainsi de limiter les possibilités de piratage.

Cet exemple de réalisation permet une mise en oeuvre rapide des moyens de commutation.

Selon un exemple de réalisation, des moyens de commutation 150 sont intégrés dans un calculateur pour permettre la transmission de trames de communication entre les moyens informatiques externes de diagnostic 140 et un bus de donnée 101₃ particulier tel que le bus CAN HS « Powertrain & Châssis » pour répondre en particulier au besoin de téléchargement et de connexion des moyens informatiques réglementaires utilisés par les forces de l'ordre, et d'autres moyens de commutation 150 sont implantés dans un voire plusieurs boîtiers indépendants pour permettre la transmission de trames de communication entre les moyens informatiques externes de diagnostic 140 et d'autre bus de donnée particulier.

Implanter des moyens de commutation dans le calculateur diminue les coûts par rapport à implanter ces moyens de commutation dans un boîtier séparé (pas de boîtier supplémentaire, pas de fils supplémentaires, pas de boîtier supplémentaire à monter dans le véhicule).

Selon un exemple de réalisation particulier, des moyens de protection 124 sont intégrés de la même façon que les moyens de commutation 150.

Ainsi, si des moyens de commutations 150, 150₁ et/ou 150₂ sont implantés dans un calculateur alors les moyens de protection 124, 124₁ et/ou 124₂ le sont aussi. Si les moyens de commutations 150, 150₁ et/ou 150₂ sont implantés dans un boîtier alors les moyens de protection 124, 124₁ et/ou 124₂ le sont aussi.

Selon un exemple de réalisation particulier, le calculateur 120 active/désactive les moyens de commutation 150, 150₁ et/ou 150₂ par des commandes.

Selon un exemple de réalisation, une commande est un signal de type tout ou rien, par exemple par un niveau haut (High-Side en anglais, commande par +12V) ou niveau bas (Low-Side en anglais, commande par la masse) émise sur une liaison filaire.

Selon un exemple de réalisation particulier correspondant à une implantation des moyens de commutation dans un voire plusieurs boîtiers indépendants, les moyens de commutation sont commandés via des signaux tout ou rien de type « pont en H » (1 commande High-Side (commande par +12V) et une commande Low-Side (commande par la masse), ce qui complique la tâche d'un pirate cherchant à commander les moyens de commutation pour accéder au(x) bus de donnée 101₃.

Afin de compliquer encore plus la tâche d'éventuels pirates, selon un exemple de réalisation, les commandes High-Side et Low-Side peuvent provenir de 2 calculateurs différents. Une telle solution est un bon compromis entre le coût et la difficulté de piratage du dispositif.

Selon un exemple de réalisation particulier correspondant à une implantation des moyens de commutation dans un voire plusieurs boîtiers indépendants, des moyens de commutation peuvent être commandés via des signaux multiplexés et une électronique de commande dans le boîtier commandant les moyens de commutation.

Cet exemple de réalisation particulier peut compliquer un peu la tâche d'un pirate, nécessitant l'utilisation des moyens de communication multiplexés. D'un point de vue économique, cet exemple de réalisation particulier peut être avantageux dans le cas de plusieurs moyens de commutation pour plusieurs bus de donnée mais est plus coûteuse qu'une solution de commande filaire dans le cas de moyens de commutation pour protéger l'accès à un seul bus de donnée.

Selon un exemple de réalisation, les commandes sont cryptées.

Selon un exemple de réalisation particulier, des moyens de commutation sont des relais électromagnétiques.

Selon un exemple de réalisation particulier, des moyens de commutation sont des commutateurs électromagnétiques ou des commutateurs électroniques, par exemple des transistors MOS.

Selon une variante, dans le cas de relais électromécaniques, les moyens de commutation prennent la forme d'un relai double comprenant deux éléments de commutation (interrupteurs), assurant chacun la commutation d'une ligne d'un bus de donnée CAN (H et L par exemple), commandés par le biais d'une bobine commune.

Selon une autre variante, les moyens de commutation prennent la forme de deux relais simples.

Selon un exemple de réalisation particulier, des moyens de commutation comportent deux commutateurs permettant de commuter la ligne CAN H et la ligne CAN L dans le cas d'un bus de donnée de type CAN.

Cet exemple de réalisation particulier est avantageux car les bus de donnée utilisés dans les véhicules sont majoritairement bifilaires.

Selon un exemple de réalisation particulier, des moyens de commutation comportent au moins un relais inverseur de type « télécom » compatibles de faibles courants.

Selon un exemple de réalisation particulier, des moyens de commutation comportent au moins un relais inverseur de type monostable (nécessitant une commande permanente pour maintenir le relais en position travail).

Selon un exemple de réalisation particulier, des moyens de commutation comportent au moins un relais inverseur de type bistable (nécessitant des commandes impulsionnelles pour changer la position du relais de repos vers travail et vice-versa).

Selon une variante des deux précédents exemples de réalisation (relais monostable ou relais bistable), un relais « simple » peut être utilisé pour chaque signal d'un bus de donné CAN (lignes CAN H et CAN L).

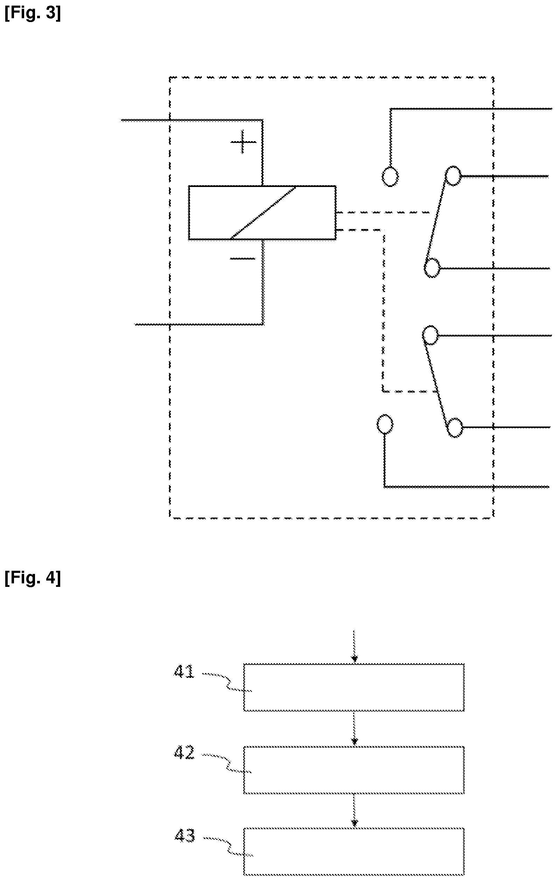

Selon une variante des deux précédents exemples de réalisation (relais monostable ou relais bistable) illustré à la figure 3, un relais « double » peut être utilisé avec des contacts assurant la commutation de chaque ligne H et L du bus de donnée CAN mais avec une bobine commune commandant les deux contacts.

Cette solution est plus compacte, plus légère, moins consommatrice en énergie et moins coûteuse.

Selon un exemple de réalisation particulier, des moyens de commutation sont mis en oeuvre par des semi-conducteurs, par exemple des transistors MOSFET.

Cet exemple de réalisation particulier est compact, légère et moins consommatrice en énergie.

[Fig. 4] illustre un organigramme des différentes étapes d'un procédé de contrôle de l'accès de moyens informatiques de diagnostic à un bus de donnée embarqué d'un véhicule, selon un exemple de réalisation particulier de la présente invention.

Le procédé est par exemple mis en oeuvre par un dispositif 100 embarqué dans un véhicule.

Dans une première étape 41, les moyens informatiques externes de diagnostic 140 sont authentifiés sur la base de requête d'authentification reçue sur le premier port matériel 125 du calculateur 120.

Dans une deuxième étape 42, si les moyens informatiques externes de diagnostic 140 ne sont pas authentifiés, le calculateur désactive les moyens de commutation 150, 150₁, 150₂ qui passent dans une position de repos.

Dans une troisième étape 43, si les moyens informatiques externes de diagnostic 140 sont authentifiés, le calculateur 120 active les moyens de commutation 150, 150₁, 150₂ qui passent alors de la position de repos à la position active, pour connecter le second port matériel 112 de la prise de diagnostic au second port matériel 126 du calculateur. Les moyens informatiques externes de diagnostic 140 sont alors connectés avec des calculateurs et/ou organes accessibles via un bus de donnée 101₃ et le bus de donnée 101₅.

Selon une variante de réalisation, les variantes et exemples des opérations décrits en relation avec la figure 1 s'appliquent aux étapes du procédé de la figure 4.

Certaines caractéristiques décrites relativement à l'un des exemples de réalisation particuliers peuvent se combiner avec d'autres caractéristiques décrites en référence à d'autres exemples de réalisation particuliers pour envisager des exemples de réalisation particuliers supplémentaires qui tombent sous la portée de l'invention.

L'invention concerne également un véhicule, par exemple automobile ou plus généralement un véhicule autonome à moteur terrestre, comprenant le dispositif 100 de la figure 1 ou 2.

## Revendications

1. Dispositif de contrôle de l'accès de moyens informatiques externes de diagnostic (140) à au moins un bus de donnée (101₃) embarqué d'un véhicule, ledit dispositif comportant :
un calculateur (120) assurant le rôle de passerelle (121) en permettant la transmission de trames de communication et/ou de signaux électriques entre un premier port matériel (125) du calculateur adapté pour être connecté à un premier bus de donnée (101₁) et à au moins un second port matériel (126) du calculateur adapté pour être connecté audit au moins un bus de donnée (101₃) embarqué du véhicule ;
une prise de diagnostic (110) comportant un premier port (111) adapté pour être connecté au premier port matériel (125) du calculateur via le premier bus de donnée (101₁) ;
des moyens d'authentification (122) assumant un rôle d'authentification desdits moyens informatiques externes de diagnostic (140) sur la base de requête d'authentification reçue sur le premier port matériel (125) du calculateur ;
des moyens de filtrage (123) adaptés pour bloquer la transmission à travers de la passerelle (121) d'au moins une trame de communication non autorisée ;
des moyens de commutation (150, 150₁, 150₂) connectés à un second port matériel (112) de la prise de diagnostic et adaptés pour connecter le second port matériel (112) de la prise de diagnostic au second port matériel (126) du calculateur lorsque lesdits moyens informatiques externes de diagnostic (140) sont authentifiés par les moyens d'authentification (122),
**caractérisé en ce que**
les moyens de commutation sont en plus adaptés pour connecter le second port matériel (112) de la prise de diagnostic au premier port matériel (125) du calculateur lorsque lesdits moyens de commutation (150) sont au repos.

2. Dispositif selon la revendication 1, pour lequel le calculateur (120) et adapté pour désactiver les moyens de commutations (150, 150₁, 150₂) qui retrouvent leur position de repos sur demande des moyens informatiques externes de diagnostic (140), en cas de perte de communication entre les moyens informatiques externes de diagnostic (140) et un bus de donnée (101₃) embarqué du véhicule, à la mise en veille du véhicule, au bout d'un temps maximum de communication ou en cas de transmission d'une trame de communication non autorisée.

3. Dispositif selon la revendication 1, pour lequel le calculateur (120) est adapté pour piloter les moyens de commutation pour donner accès à un bus de donnée (101₃) particulier embarqué du véhicule.

4. Dispositif selon la revendication 1 qui comporte en outre des moyens de protection (124) qui sont connectés aux moyens de commutation.

5. Dispositifs selon la revendication 4, pour lequel le calculateur, les moyens d'authentification, les moyens de filtrage, les moyens de commutation et/ou les moyens de protection font partie d'un même boîtier.

6. Dispositif selon la revendication 1, pour lequel les moyens de commutation sont intégrés au calculateur.

7. Dispositif selon la revendication 1, pour lequel les moyens de commutation sont implantés dans un boîtier séparé.

8. Procédé de contrôle de l'accès de moyens informatiques externes de diagnostic (140) à au moins un bus de donnée (101₃) embarqué d'un véhicule, ledit procédé comprenant des étapes suivantes :
authentification (41) desdits moyens informatiques externes de diagnostic 140 sur la base de requête d'authentification reçue sur un premier port matériel (125) d'un calculateur (120) assurant le rôle de passerelle (121) en permettant la transmission de trames de communication et/ou de signaux électriques entre un premier port matériel (125) du calculateur adapté pour être connecté à un premier bus de donnée (101₁) et à au moins un second port matériel (126) du calculateur adapté pour être connecté audit au moins un bus de donnée (101₃) embarqué du véhicule ;
si les moyens informatiques externes de diagnostic (140) sont authentifiés, le calculateur active (43) les moyens de commutation (150, 150₁, 150₂) qui passent alors de la position de repos à la position active, pour connecter le second port matériel (112) de la prise de diagnostic au second port matériel (126) du calculateur,
**caractérisé en ce que**
si les moyens informatiques externes de diagnostic (140) ne sont pas authentifiés, le calculateur désactive (42) des moyens de commutation qui passent dans une position de repos, lesdits moyens de commutation (150, 1501 , 1502) étant connectés à un second port matériel (112) d'une prise de diagnostic et adaptés pour connecter le second port matériel (112) de la prise de diagnostic au premier port matériel (125) du calculateur.

9. Produit programme d'ordinateur comportant des instructions adaptées pour l'exécution des étapes du procédé selon la revendication 8, lorsque le programme d'ordinateur est exécuté par au moins un processeur.

10. Véhicule comprenant un dispositif selon l'une des revendications 1 à 7.

## Patentansprüche

1. Vorrichtung zum Steuern des Zugangs zu externen Computerdiagnosemitteln (140) zu mindestens einem bordeigenen Datenbus (101₃) eines Fahrzeugs, wobei die Einrichtung umfasst:
einen Computer (120), der als Gateway (121) fungiert, indem er die Übertragung von Kommunikationsrahmen und/oder elektrischen Signalen zwischen einem ersten Hardware-Port (125) des Computers, der für den Anschluss an einen ersten Datenbus (101_{1) ausgelegt ist}, und einem mindestens zweiten Hardware-Port (126) des Computers ermöglicht, der für den Anschluss an den mindestens einen fahrzeugseitigen Datenbus (101₃) des Fahrzeugs ausgelegt ist;
eine Diagnosebuchse (110) mit einem ersten Anschluss (111), der dafür ausgelegt ist, über den ersten Datenbus (101₁) mit dem ersten Hardwareanschluss (125) des Steuergeräts verbunden zu werden;
Authentifizierungsmittel (122), das eine Authentifizierungsrolle des externen Computerdiagnosemittels (140) auf der Grundlage einer Authentifizierungsanforderung übernimmt, die auf dem ersten Hardwareport (125) des Computers empfangen wurde;
Filtereinrichtung (123), die so ausgelegt ist, dass sie die Übertragung mindestens eines nicht autorisierten Kommunikationsrahmens durch das Gateway (121) blockiert;
Schaltmittel (150, 150₁, 150₂), die mit einem zweiten Hardware-Port (112) der Diagnose-Buchse verbunden sind und dazu hergerichtet sind, die zweite Hardware-Port (112) der Diagnose-Buchse mit der zweiten Hardware-Port (126) des Steuergeräts zu verbinden, wenn die externen Computer-Diagnose-Mittel (140) durch die Authentifizierungsmittel (122) authentifiziert werden,
**dadurch gekennzeichnet, dass**
Die Schaltmittel sind auch geeignet, den zweiten Hardware-Port (112) der Diagnosebuchse mit dem ersten Hardware-Port (125) des Steuergeräts zu verbinden, wenn sich die Schaltmittel (150) im Ruhezustand befinden.

2. Vorrichtung nach Anspruch 1, wobei die Steuereinheit (120) so ausgelegt ist, dass sie die Schaltmittel (150, 150₁, 150₂), die auf Verlangen des externen Computerdiagnosemittels (140) in ihre Ruhestellung zurückkehren, im Falle eines Kommunikationsverlusts zwischen dem externen Computerdiagnosemittel (140) und einem bordeigenen Datenbus (101₃) des Fahrzeugs deaktiviert, wenn das Fahrzeug in den Bereitschaftszustand versetzt wird, nach einer maximalen Kommunikationszeit oder im Falle der Übertragung eines nicht autorisierten Kommunikationsrahmens.

3. Vorrichtung nach Anspruch 1, wobei der Computer (120) so ausgelegt ist, dass er die Schalteinrichtung antreibt, um den Zugang zu einem bestimmten Datenbus (101₃) zu ermöglichen, der in das Fahrzeug eingebettet ist.

4. Vorrichtung nach Anspruch 1, die ferner Schutzmittel (124) umfasst, die mit den Schaltmitteln verbunden sind.

5. Vorrichtungen nach Anspruch 4, wobei der Computer, die Mittel zur Authentifizierung, die Mittel zur Filterung, die Mittel zum Schalten und/oder die Schutzmittel Teil desselben Gehäuses sind.

6. Vorrichtung nach Anspruch 1, bei der die Schaltmittel in den Computer integriert sind.

7. Vorrichtung nach Anspruch 1, wobei die Schaltmittel in einem separaten Gehäuse angeordnet sind.

8. Verfahren zum Steuern des Zugangs eines externen Computerdiagnosemittels (140) zu mindestens einem bordeigenen Datenbus (101₃) eines Fahrzeugs, wobei das Verfahren die folgenden Schritte umfasst:
Authentifizierung (41) des externen Computerdiagnosemittels 140 auf der Grundlage einer Authentifizierungsanforderung, die an einem ersten Hardwareport (125) eines Computers (120) empfangen wird, der als Gateway (121) fungiert, indem es die Übertragung von Kommunikationsrahmen und/oder elektrischen Signalen zwischen einem ersten Hardwareport (125) des Computers ermöglicht, der für die Verbindung mit einem ersten Datenbus (101₁) und mindestens einem zweiten Hardwareport (126) des Computers konfiguriert ist geeignet für den Anschluss an mindestens einen fahrzeugseitigen Datenbus (101₃) des Fahrzeugs;
Sind die externen Diagnose-Rechenmittel (140) authentifiziert, aktiviert der Computer (43) die Schaltmittel (150, 150₁, 150₂), die dann von der Ruhestellung in die aktive Stellung wechseln, um den zweiten Hardware-Port (112) des Diagnosesockels mit dem zweiten Hardware-Port (126) des Steuergeräts zu verbinden ,
**dadurch gekennzeichnet, dass**
Wenn die Diagnoseeinrichtung (140) des externen Computers nicht authentifiziert ist, deaktiviert der Computer (42) Schaltmittel, die in eine Ruhestellung übergehen, wobei die Schaltmittel (150, 1501, 1502) mit einem zweiten Hardwareanschluss (112) einer Diagnosebuchse verbunden und so angepasst sind, dass sie den zweiten Hardwareanschluss (112) der Diagnosebuchse mit dem ersten Hardwareanschluss (125) des Steuergeräts verbinden.

9. Computerprogrammprodukt mit Anweisungen, die für die Ausführung der Verfahrensschritte nach Anspruch 8 angepasst sind, wobei das Computerprogramm von mindestens einem Prozessor ausgeführt wird.

10. Fahrzeug, das eine Vorrichtung nach einem der Ansprüche 1 bis 7 umfasst.

## Claims

1. A device for controlling access to external computer diagnostic means (140) to at least one on-board data bus (1013) of a vehicle, said device comprising:
a computer (120) acting as a gateway (121) by allowing the transmission of communication frames and/or electrical signals between a first hardware port (125) of the computer adapted to be connected to a first data bus (101₁) and to at least one second hardware port (126) of the computer adapted to be connected to said at least one on-board data bus (101₃) of the vehicle;
a diagnostic socket (110) having a first port (111) adapted to be connected to the first hardware port (125) of the ECU via the first data bus (101₁);
authentication means (122) assuming an authentication role of said external computer diagnostic means (140) on the basis of an authentication request received on the first hardware port (125) of the computer;
filtering means (123) adapted to block the transmission through the gateway (121) of at least one unauthorized communication frame;
switching means (150, 150₁, 150₂) connected to a second hardware port (112) of the diagnostic socket and adapted to connect the second hardware port (112) of the diagnostic socket to the second hardware port (126) of the ECU when said external computer diagnostic means (140) are authenticated by the authentication means (122),
**characterized in that**
The switching means are also suitable for connecting the second hardware port (112) of the diagnostic socket to the first hardware port (125) of the ECU when said switching means (150) are at rest.

2. A device according to claim 1, wherein the control unit (120) is adapted to disable the switching means (150, 1501, 150₂) which return to their resting position on request of the external computer diagnostic means (140), in the event of a loss of communication between the external computer diagnostic means (140) and an on-board data bus (101₃) of the vehicle, when the vehicle is put on standby, after a maximum communication time or in the event of the transmission of an unauthorised communication frame.

3. A device according to claim 1, wherein the computer (120) is adapted to drive the switching means to provide access to a particular data bus (101₃) embedded in the vehicle.

4. A device according to claim 1 which further comprises means of protection (124) which are connected to the switching means.

5. Devices according to claim 4, wherein the computer, the means of authentication, the means of filtering, the means of switching and/or the means of protection are part of the same housing.

6. The device according to claim 1, for which the switching means are integrated into the computer.

7. The device of claim 1, wherein the switching means are located in a separate housing.

8. A method for controlling the access of external computer diagnostic means (140) to at least one on-board data bus (101₃) of a vehicle, said method comprising the following steps:
authentication (41) of said external computer diagnostic means 140 on the basis of an authentication request received on a first hardware port (125) of a computer (120) acting as a gateway (121) by allowing the transmission of communication frames and/or electrical signals between a first hardware port (125) of the computer adapted to be connected to a first data bus (101₁) and to at least a second hardware port (126) of the computer suitable to be connected to at least one on-board data bus (101₃) of the vehicle;
if the external diagnostic computing means (140) are authenticated, the computer activates (43) the switching means (150, 150₁, 150₂) which then switch from the rest position to the active position, to connect the second hardware port (112) of the diagnostic socket to the second hardware port (126) of the ECU,
**characterized in that**
if the external computer diagnostic means (140) are not authenticated, the computer disables (42) switching means that pass into a quiescent position, said switching means (150, 1501, 1502) being connected to a second hardware port (112) of a diagnostic socket and adapted to connect the second hardware port (112) of the diagnostic socket to the first hardware port (125) of the ECU.

9. A computer program product with instructions adapted for the execution of the process steps according to claim 8, where the computer program is executed by at least one processor.

10. A vehicle comprising a device according to one of claims 1 to 7.
